# EUROPÄISCHE PATENTANMELDUNG

(11) **EP 1 491 843 A2**
(43) Veröffentlichungstag der Anmeldung: **29.12.2004**
(21) Anmeldenummer: 04013025.4
(22) Anmeldetag: 02.06.2004
(51) Int. Cl.: F28F 19/06, F28F 21/08

(54) **Wärmeüberträger, insbesondere Ladeluftkühler für Nutzfahrzeuge**

(30) Priorität: 25.06.2003 DE 10328748
(71) Anmelder: Behr GmbH & Co. KG, 70469 Stuttgart (DE)
(72) Erfinder: Emrich, Karsten, 70197 Stuttgart (DE); Kull, Reinhard, 71642 Ludwigsburg (DE); Völker, Cord, 71522 Backnang (DE)

(57) **Zusammenfassung**

Die Erfindung betrifft einen Wärmeübertrager, insbesondere einen Ladeluftkühler für Kraftfahrzeuge, mit zumindest einem Rohr, Rohrboden, Sammelkasten und/oder Turbulenzblech aus einem Stahlband zur Führung eines ersten Fluids, insbesondere Ladeluft und mit zwischen den Rohren (5) angeordneten, mit diesen wärmeleitend verbundenen, von einem zweiten Fluid überströmbaren Rippen.

## Beschreibung

Die Erfindung betrifft einen Wärmeübertrager, insbesondere einen Ladeluftkühler für Fahrzeuge nach dem Oberbegriff des Patentanspruches 1.

Bekannte Wärmeübertrager, insbesondere für Kraftfahrzeuge, werden üblicherweise aus Aluminium bzw. Aluminiumlegierungen hergestellt. Ein derartiger Wärmeübertrager, wie z. B. in der DE-A 198 57 435 offenbart, besteht aus einem Wärmeübertragernetz mit Rippen und zwischen den Rippen angeordneten Well- oder Stegrippen, die mit den Außenflächen der Rohre, meistens Flach- oder Rechteckrohre, verlötet sind. Die Rohre selbst sind mit ihren Rohrenden in Rohrböden von Sammelkästen aufgenommen und mit den Rohrböden verlötet. Für die Verlötung ist mindestens ein Teil einer Lotpaarung mit einer Lotschicht oder Lotplattierung aus einer Lotlegierung, z. B. Al-Si versehen. Die Rohre der Ladeluftkühler werden von heißer Ladeluft durchströmt, die nach ihrer Abkühlung im Ladeluftkühler dem Verbrennungsmotor des Kraftfahrzeuges zugeführt wird. Die Temperatur der Ladeluft kann nach ihrer Verdichtung 200 bis über 300 Grad Celsius erreichen, bevor sie in den Ladeluftkühler eintritt. Die Außenseite der Rohre, deren Austauschfläche durch die Rippen vergrößert ist, wird von Umgebungsluft gekühlt. Bei Temperaturen oberhalb 150 Grad Celsius nimmt die Materialfestigkeit von Aluminium ab, was sich insbesondere negativ auf die Bauteile eines Wärmeübertragers auswirkt, die dieser Temperatur unmittelbar ausgesetzt sind. Um diesen erhöhten Anforderungen an die Temperaturfestigkeit des Materials nachzukommen, hat man beispielsweise die Wandstärke der Rohre erhöht, was zwangsläufig zu einem erhöhten Gewicht und auch zu einer schlechteren Wärmeleitung führt, wobei der Festigkeitsabfall wirtschaftlich zumeist nicht ganz kompensiert werden kann. Dieses Problem ist nicht auf die o. g. Bauart von Ladeluftkühlern mit Flachrohren beschränkt, sondern tritt ebenso bei Aluminiumwärmeübertrager in Platten- der Stapelbauweise auf, bei welchen die Strömungskanäle bzw. "Rohre" durch Platten oder Scheiben gebildet werden - z. B. gemäß der DE-A 195 11 991.

Es ist daher Aufgabe der vorliegenden Erfindung, einen Wärmeübertrager der eingangs genannten Art hinsichtlich seiner Warmfestigkeit, insbesondere der Warmfestigkeit der Rohre zu verbessern, ohne dass dadurch das Gewicht des Wärmeübertragers wesentlich zunimmt, wobei der Wärmeübertrager gegebenenfalls unter Anwendung bekannter Verfahren ohne wesentliche Änderungen herstellbar ist.

Diese Aufgabe wird durch die Merkmale des Patentanspruches 1 gelöst. Erfindungsgemäß ist vorgesehen, dass die Rohre, Rohrböden, Sammelkästen und/oder Turbulenzbleche des Wärmeübertragers aus einem ein- oder beidseitig mit Aluminium beschichteten bzw. plattierten Stahlband hergestellt sind. Der Kernwerkstoff des Rohres besteht somit aus Stahl, d. h. einem hochfesten Material, welches auch bei höheren Temperaturen seine Festigkeit beibehält. Eine oder beide Außenseiten des Stahlbandes sind mit einer Aluminiumschicht versehen, die einerseits einen Korrosionsschutz des Kernmaterials bildet und andererseits eine Verlötung der Rohre mit den Rippen und mit dem Rohrboden erlaubt. Diese Verbesserung der Festigkeit und insbesondere der Warmfestigkeit des Rohrmaterials ist quasi gewichtsneutral, d. h. es ergibt sich kein höheres Gewicht für die Rohre gegenüber Aluminiumrohren mit größerer Wandstärke.

Unter dem Begriff "Rohre" sind generell Strömungskanäle zu verstehen, die aus dem erfindungsgemäßen aluminiumplattierten Stahlband herstellbar sind, also z. B. Flachrohre oder Scheiben- bzw. Plattenpaare. Unter dem Begriff "Stahl" ist auch ein gleichwertiger Werkstoff mit hoher Warmfestigkeit zu verstehen. Unter dem Begriff "Turbulenzblech" ist auch eine Rippe, wie beispielsweise eine Wellrippe, zu verstehen. Unter dem Begriff "Rohrboden" ist der Teil eines Sammelbehälters zu verstehen, der Öffnungen für die Aufnahme der Rohre aufweist, so daß die Rohre kommunizierend mit dem Sammelbehälter verbindbar sind.

Nach einer nebengeordneten vorteilhaften Lösung der Erfindung ist das Kernmaterial der Rohre, Rohrböden, Sammelkästen und/oder Turbulenzbleche, ebenfalls Stahl, beidseitig mit einem Aluminiumlotmaterial beschichtet, z. B. mit einer Al-Si-Legierung plattiert. Auch hier wirkt die Lotplattierung als Korrosionsschutz des Grundmaterials und erlaubt eine Verlötung mit Rippen und Rohrboden, während gleichzeitig die Festigkeit der Rohre erhöht wird.

Nach einer weiteren vorteilhaften Ausgestaltung der Erfindung ist die Aluminiumschicht beidseitig auf das Kernmaterial aufgebracht. Vorteilhaft hierbei ist, dass auch die Innenseite des Rohres mit weiteren Teilen, z. B. Turbulenzeinlagen verlötet werden kann. Es ist somit möglich, denselben Typ von Wärmeübertrager bzw. Ladeluftkühler herzustellen, obwohl das Kernmaterial für die Rohre ausgetauscht ist.

Nach einer weiteren vorteilhaften Ausgestaltung der Erfindung ist das Material der Rohre, Rohrböden, Sammelkästen und/oder Turbulenzbleche aus einem beidseitig aluminiumplattierten Kaltband, also einem kalt gewalzten Stahlblech hergestellt, d. h. die Herstellung des Grundmaterials und der Plattierungen erfolgt quasi in einem Arbeitsgang.

Nach weiteren vorteilhaften Ausgestaltungen der Erfindung können die Rohre in einer Längsnaht geschweißt oder gelötet sein. Dies verbilligt die Herstellkosten, z. B. gegenüber extrudierten Rohren.

Nach einer weiteren vorteilhaften Ausgestaltung der Erfindung wird auf die Aluminiumschicht zusätzlich eine Lotschicht aufgebracht, z. B. eine bekannte Al-Si-, d. h. Aluminium-Silizium-Legierung. Dadurch ist es möglich, Rippen und Boden mit den Rohren zu verlöten, ohne dass die Rippen und die Rohre selbst lotplattiert sein müssen. Es reicht also aus, dass die Lotschicht entweder auf den Rohren oder auf den Rippen und dem Rohrboden angeordnet ist, damit beim Lötprozess ein hinreichendes Lotangebot besteht. Dies gilt natürlich genauso für die Innenseiten des Rohres und die Verlötung von Turbulenzblechen.

Nach einer weiteren vorteilhaften Ausgestaltung der Erfindung beträgt die Dicke der Aluminiumschicht ca. 4 bis 40%, insbesondere ungefähr 8 % der Dicke des Kernmaterials, also des Stahlbandes - dies ist für die vorgesehenen Funktionen wie Korrosionsschutz und Verlötung ausreichend. Bevorzugt ist auch eine Dicke der Aluminiumschicht von 0,005 bis 0,5 mm, insbesondere 0,01 bis 0,2 mm.

Nach einer vorteilhaften generellen Weiterbildung der Erfindung wird das erfindungsgemäß beschichtete Verbundmaterial für die Herstellung von Wärmeübertragern, insbesondere dessen Rohren, Rohrböden, Sammelkästen und/oder Turbulenzblechen verwendet. Während die Mehrzahl der Bauteile aus leichtem, löt- oder schweißbarem Material hergestellt werden kann, wird für die hoch beanspruchten Bauteile ein Kernmaterial hoher Warmfestigkeit mit einem korrosionsschützenden, löt- oder schweißbaren Überzug verwendet. Der gesamte Wärmeübertrager kann somit leicht und mit hoher Warmfestigkeit hergestellt werden.

Ein Ausführungsbeispiel der Erfindung ist in der Zeichnung dargestellt und wird im Folgenden näher beschrieben. Es zeigen
- Fig. 1: einen Schnitt durch ein beidseitig mit Aluminium beschichtetes Stahlband,
- Fig. 2: ein Rechteckrohr (schematisch), innen und außen beschichtet.

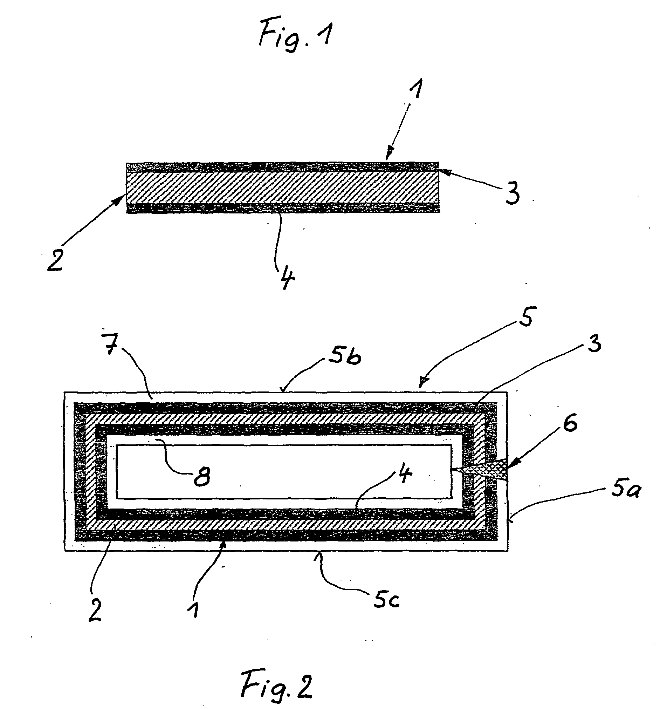

**Fig. 1** zeigt einen Querschnitt eines beschichteten Stahlbandes 1, welches eine relativ dicke Kernschicht 2 aus Stahl oder einem ähnlichen Werkstoff, d. h. mit ähnlichen Eigenschaften aufweist. Oberhalb und unterhalb des Stahlbandes ist eine Aluminiumschicht- bzw. -auflage 3, 4 aufgebracht, d. h. fest mit der Kernschicht 2 verbunden. Die Herstellung dieses Verbundwerkstoffes kann durch Walzen erfolgen, z. B. als beidseitig aluminiumplattiertes Kaltband, d. h. ein Stahlblech wird kalt gewalzt und mit der Aluminiumschicht plattiert, die etwa 4 bis 40%, insbesondere 8% der Wanddicke des Stahlbandes betragen kann. Zusätzlich - was in dieser Abbildung nicht dargestellt ist - können auf beide Aluminiumschichten noch Lotplattierungen aufgebracht werden, die ebenfalls aus einer Aluminiumlegierung bestehen, allerdings mit Si (Silizium) oder anderen die Schmelztemperatur senkenden Zusätzen legiert ist.

**Fig. 2** zeigt ein Rohr 5 für einen nicht dargestellten Wärmeübertrager bzw. Ladeluftkühler mit dem Bandmaterial gemäß Fig. 1. Das aluminiumbeschichtete Band 1 gemäß Fig. 1 wird in an sich bekannter Weise auf einer nicht dargestellten Rollformeinrichtung zu einem Rohrprofil - wie schematisch in der Zeichnung dargestellt - geformt und an seiner Schmalseite 5a durch eine Längsschweißnaht 6 geschlossen oder durch eine lokale Überlappung der Wandung für eine spätere Verlötung vorbereitet. In Fig. 2 sind dieselben Bezugszahlen wie in Fig. 1 verwendet.

Man sieht, dass das Rohr 5 sowohl innen als auch außen mit einer Aluminiumschicht 3, 4 versehen ist. Zusätzlich sind sowohl auf der Außenseite als auch auf der Innenseite des Rohres 5 Lotschichten 7, 8 aufgebracht, die aus einer Al-Si-Legierung bestehen können und - wie bereits erwähnt- durch Plattierung vor dem Verschweißen des Rohres aufgebracht werden. Das Rohr 5 wird für das Netz des nicht dargestellten Ladeluftkühlers verwendet. Durch den Innenquerschnitt 9 des Rohres 5 strömt Ladeluft, auf seiner Außenseite strömt Umgebungsluft. An den Längsseiten 5b, 5c des Rohres 5 sind nicht dargestellte Luftrippen angeordnet und mit dem Rohr verlötet, was durch die Lotbeschichtung 7 ermöglicht wird. Die aus Aluminium hergestellten Rippen brauchen daher selbst nicht mit einer Lotlegierung versehen zu sein.

Der Innenquerschnitt 9 des Flachrohres 5 kann durch ein nicht dargestelltes Turbulenzblech ausgefüllt werden, das mit den Innenseiten des Flachrohres mittels der Lotbeschichtung 8 verlötet wird. Eine solches Turbulenzblech ist zur Erhöhung des Wärmeübergangs und der Innendruckfestigkeit (Zugankerwirkung) insbesondere für Ladeluftrohre vorteilhaft. Die Verwendung von aluminiumbeschichtetem Stahlband für diese Turbulenzbleche ist für eine höhere Innendruckfestigkeit ebenfalls vorteilhaft.

Wie bereits erwähnt, kann das erfindungsgemäße Verbundmaterial auch für andere Bauarten von Wärmeübertragern verwendet werden, z. B. für Platten- oder (Stapel-) Scheibenwärmeübertrager, Die Strömungskanäle werden dabei durch Platten- oder Scheibenpaare gebildet, die umfangseitig miteinander verlötet, innen mit Turbulenzeinlagen und außen mit Rippen aus Aluminium verlötet sind.

## Patentansprüche

1. Wärmeübertrager, insbesondere Ladeluftkühler für Kraftfahrzeuge, mit Rohren (5) zur Führung eines ersten Fluids, insbesondere Ladeluft, und insbesondere mit zwischen den Rohren (5) angeordneten, mit diesen wärmeleitend verbundenen, von einem zweiten Fluid überströmbaren Rippen, **dadurch gekennzeichnet, dass** zumindest ein Rohr (5), Rohrboden, Sammelkasten und/oder Turbulenzblech des Wärmeübertragers aus einem Stahlband (2) hergestellt ist, auf welches eine Aluminiumschicht (3) aufgebracht ist.

2. Wärmeübertrager, insbesondere Ladeluftkühler für Nutzkraftfahrzeuge, mit Rohren (5) zur Führung eines ersten Fluids, insbesondere Ladeluft, und insbesondere mit zwischen den Rohren (5) angeordneten, mit diesen wärmeleitend verbundenen, von einem zweiten Fluid überströmbaren Rippen, **dadurch gekennzeichnet, dass** zumindest ein Rohr (5), Rohrboden, Sammelkasten und/oder Turbulenzblech des Wärmeübertragers aus einem mindestens einseitig lotplattieren Stahlband hergestellt ist.

3. Wärmeübertrager nach Anspruch 1, **dadurch gekennzeichnet, dass** die Aluminiumschicht (3, 4) beidseitig aufgebracht ist.

4. Wärmeübertrager nach Anspruch 1, **dadurch gekennzeichnet, dass** das Stahlband als beidseitig Al-plattiertes Kaltband (1) ausgebildet ist.

5. Wärmeübertrager nach Anspruch 1, 3 oder 4, **dadurch gekennzeichnet, dass** auf die Aluminiumschicht (3, 4) zusätzlich eine Lotschicht (7, 8) aufgebracht ist.

6. Wärmeübertrager nach Anspruch 1, 3, 4 oder 5, **dadurch gekennzeichnet, dass** die Dicke der Al-Schicht (3, 4) ca. 4 bis 40%, insbesondere 8 % der Dicke des Stahlbandes (2) oder 0,005 bis 0,5 mm, insbesondere 0,01 bis 0,2 mm beträgt.

7. Wärmeübertrager nach einem der vorhergehenden Ansprüche, **dadurch gekennzeichnet, dass** das Rohr als Flachrohr (5) ausgebildet und längsnahtgeschweißt ist.

8. Wärmeübertrager nach einem der Ansprüche 1 bis 6, **dadurch gekennzeichnet, dass** das Rohr (5) mittels einer Längsnaht verlötet ist.

9. Wärmeübertrager nach einem der vorhergehenden Ansprüche, **dadurch gekennzeichnet, dass** das Rohr als Strömungskanal ausgebildet ist, der aus Platten bzw. Scheiben zusammengesetzt ist.

10. Wärmeübertrager nach einem der vorhergehenden Ansprüche, **dadurch gekennzeichnet, dass** die Rippen mit den Außenseiten (5b, 5c) der Rohre (5) verlötet sind.

11. Wärmeübertrager nach einem der vorhergehenden Ansprüche, **dadurch gekennzeichnet, dass** der Innenquerschnitt (9) der Rohre (5) durch Turbulenzeinlagen ausgefüllt ist, die mit der Innenseite (8) des Rohres (5) verlötet sind.

12. Verwendung eines beschichteten Blechbandes mit einem hoch- und/oder warmfesten Kernmaterial und einer lötbaren oder schweißbaren Beschichtung als Bauteil, insbesondere als Rohr, Rohrboden, Sammelkasten und/oder Turbulenzblech eines Wärmeübertragers.
